# EUROPEAN PATENT APPLICATION

(11) **EP 4 810 377 A1**
(43) Date of publication of application: **23.09.2026**
(21) Application number: 26165061.8
(22) Date of filing: 16.03.2026
(51) Int. Cl.: B64D 27/40

(54) **AIRCRAFT PYLON MOUNTING FITTING, AIRCRAFT SUBASSEMBLIES AND METHOD OF CONSTRUCTING THE SAME**

(30) Priority: 18.03.2025 GB 202503953
(71) Applicant: Airbus Operations Limited, Bristol BS34 7PA (GB)
(72) Inventor: EGGELTON, Matthew, Bristol, BS34 7PA (GB); JONES, Tim, Bristol, BS34 7PA (GB); ADAMS, Samuel, Bristol, BS34 7PA (GB); WATSON, Ross, Bristol, BS34 7PA (GB)
(74) Representative: Mathys & Squire

(57) **Abstract**

An aircraft pylon mounting fitting (10a; 10b) comprising a connecting portion (12a; 12b) and a clevis portion (14a; 14b), the clevis portion (14a; 14b) being integrally formed with the connecting portion (12a; 12b), wherein the connecting portion (12a; 12b) comprises a plurality of holes (13) for attaching the connecting portion (12a; 12b) to an aircraft wing structure, tail structure or fuselage structure, and wherein the clevis portion (14a; 14b) comprises mutually-opposing first and second fork parts (16a, 17a; 16b, 17b) arranged to receive a lug (32a; 32b) of a pylon (30) therebetween, the first fork part (16a; 16b) incorporating a first bore (18a; 18b) and the second fork part (17a; 17b) incorporating a second bore, the first and second bores being configured to receive a pin or bolt for attaching the clevis portion (14a; 14b) to the lug (32a; 32b) of the pylon (30); wherein at least the first bore (18a; 18b) incorporates an eccentric bush (20a; 20b).

Also provided is an aircraft wing-to-pylon subassembly comprising: a wing structure; a pylon (30); and a pylon mounting fitting (10a; 10b) as outlined above, wherein the connecting portion (12a; 12b) is attached to the wing structure and the clevis portion (14a; 14b) is attached to a lug (32a; 32b) of the pylon (30) by a pin or bolt passing through the first and second bores and the lug (32a; 32b) of the pylon (30). Aircraft tail-to-pylon and fuselage-to-pylon subassemblies are similarly provided.

An aircraft (40) comprising one or more such subassemblies is also provided, as is a method of constructing such a subassembly.

## Description

### FIELD OF THE INVENTION

This invention relates to an aircraft pylon mounting fitting, subassemblies employing such a fitting to attach a pylon to a structure of an aircraft (such as to a wing, tail or fuselage), and a method of constructing such a subassembly. The aircraft type to which the invention relates may be, but is not limited to, commercial passenger aircraft. The pylons to which the invention relates may be used to mount engines beneath or above the wings of the aircraft. Alternatively, the pylons may be used to mount engines on the tail or fuselage of the aircraft, for example. The engines may be jet engines, for example, although the invention is also applicable to other types of aircraft engines.

### BACKGROUND TO THE INVENTION

On many aircraft, especially commercial passenger aircraft, the engines are typically suspended below the wings of the aircraft by pylons. However, in other instances the engines may be mounted above the wings by pylons, or attached to the tail (empennage) or fuselage by pylons. In the context of commercial passenger aircraft, the engines may be high-bypass turbofan engines, for example.

As those skilled in the art will appreciate, pylons have a rigid structure, to allow the transmission to the wings (or tail or fuselage) of the static and dynamic forces generated by the engines, such as the weight of each engine and the thrust produced by each engine during take-off and flight. Pylons are typically in the form of a box, e.g. produced by the assembly of bottom and top spars connected to one another by a plurality of reinforcing transverse ribs situated inside the box and at its ends. In the case of underwing pylons, each pylon is attached to the upper part of a respective engine and is connected, at a wing-to-pylon junction, to respective mounting points on a respective wing. Typically the mounting points are on one or more wing spars (forming part of a wing box structure), to provide the necessary strength and stiffness to support the engine, and on the wing lower cover. The pylon may be mounted in a so-called "double strut" manner, for example, wherein an upper strut extends from the pylon box to a fitting mounted on the front spar of the wing, and a lower strut extends from the pylon box to an aft fitting mounted on the wing lower cover.

In more detail, at a wing-to-pylon junction, each pylon may be connected to the mounting points on the wing by means of one or more pylon mounting fittings. A typical pylon mounting fitting comprises a flange portion and a clevis portion. The flange portion includes a plurality of holes by means of which the pylon mounting fitting is attached to the wing, e.g. by bolts or rivets. Depending on the design of the aircraft, the pylon mounting fitting may be an underwing fitting or an overwing fitting. In other instances, the pylon mounting fitting may be a tail fitting or a fuselage fitting.

Meanwhile, the clevis portion comprises a pair of mutually-opposing fork parts, with each fork part having a hole or bore therein. The bores are in concentric alignment with one another and arranged to receive a pin or bolt therethrough. The clevis portion is arranged to receive a lug of the pylon, the lug locating between the fork parts of the clevis portion. The lug of the pylon has a hole (or "lug bore") therein, and is securely attached to the pylon mounting fitting (and in turn to the wing or other aircraft structure) by means of the aforementioned pin or bolt passing through the bores of the clevis portion and through the lug bore.

Two such pylon mounting fittings, arranged side by side, may be used to support a pylon having two lugs that are also arranged side by side. Each lug has a respective lug bore, the two lug bores being in concentric alignment with one another.

The longitudinal axis of the pin or bolt of the or each clevis portion defines a so-called "hinge line" about which the pylon may in principle be rotated (during assembly; not during service) relative to the pylon mounting fitting(s). Particularly when the pylon has two lugs side by side, to be supported by two adjacent pylon mounting fittings, it is important for the hinge line of each clevis portion and the two pylon lug bores to be accurately and concentrically aligned across the two adjacent pylon mounting fittings, to enable the pylon to be properly aligned and the engine to be correctly suspended (or otherwise mounted) on the aircraft.

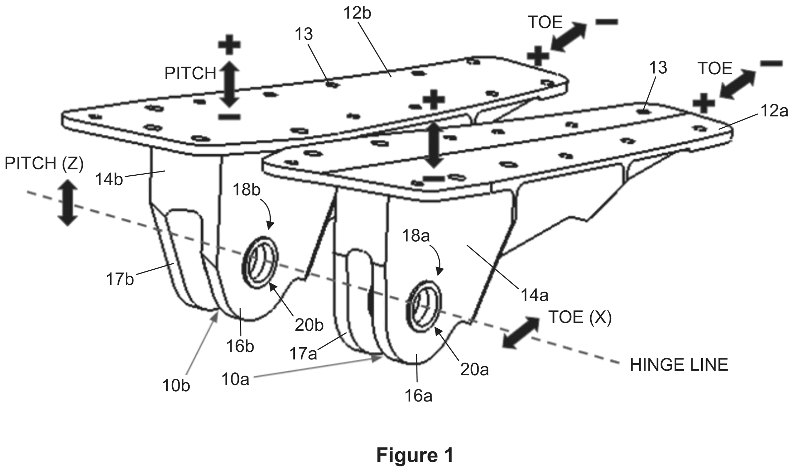

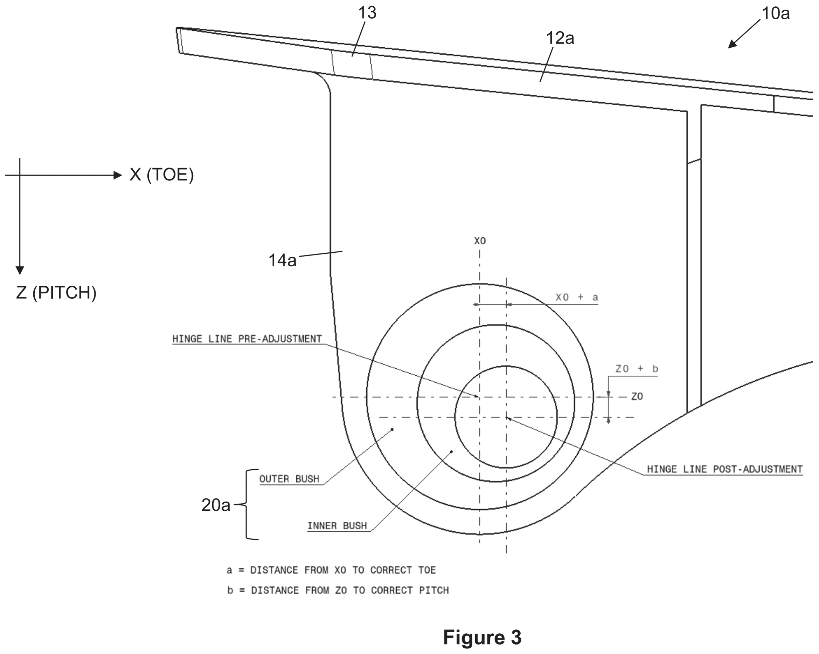

A problem exists in that, during assembly, due to manufacturing and assembly tolerances, it can be difficult to ensure that the hinge line of a clevis is correctly aligned with the lug bore of a pylon. This can make it difficult to accurately achieve lug-to-lug concentricity, and also the required pitch angle and toe angle for the pylon mounting fittings. (The concept of the pitch angle and toe angle will be explained in greater detail below, in relation to Figures 1 and 3.)

More particularly, upon installation of a pylon mounting fitting to a wing, for example, the lug bores may be misaligned due to the build-up of manufacturing and assembly tolerances. In such a situation, the lug bores will need to be corrected during assembly, to create an accurate hinge line that provides concentricity between the lugs and is also positioned to agree with global pitch and toe target values for the pylon mounting fittings.

A further problem associated with misalignment of lug bores is that the ergonomics of the alignment process become more difficult, imparting physical strain on assembly engineers.

Existing methods for correcting such misalignments at a wing-to-pylon junction typically involve line boring the bores of the pylon mounting fittings (e.g. underwing fittings) after assembly. This process is time-consuming, often on the critical path of the assembly process, and can lead to inefficiencies, quality issues such as defects (which naturally need to be addressed, e.g. through rework, before the structure can leave the assembly site), and build delays. Additionally, line boring can increase inventory costs, require additional building space and assembly jigs, and increase tooling costs. These factors make the use of line boring in this situation undesirable.

Accordingly, there is a desire to be able to assemble wing-to-pylon junctions (or wing-to-tail junctions or wing-to-fuselage junctions) without the need (or with reduced need) for line boring.

### SUMMARY OF THE INVENTION

Aspects and embodiments of the present invention are set out in the appended claims.

According to a first aspect of the present invention there is provided an aircraft pylon mounting fitting comprising a connecting portion and a clevis portion, the clevis portion being integrally formed with the connecting portion, wherein the connecting portion comprises a plurality of holes for attaching the connecting portion to an aircraft wing structure, tail structure or fuselage structure, and wherein the clevis portion comprises mutually-opposing first and second fork parts arranged to receive a lug of a pylon therebetween, the first fork part incorporating a first bore and the second fork part incorporating a second bore, the first and second bores being configured to receive a pin or bolt for attaching the clevis portion to the lug of the pylon; wherein at least the first bore incorporates an eccentric bush.

The aircraft for which the invention is employed may be a commercial passenger aircraft, for example an aircraft capable of transporting more than 50 passengers, for example more than 100 passengers. For the purposes of this application the term "commercial passenger aircraft" is also taken to include aircraft of the same type configured for cargo transport.

Advantageously, the use of eccentric bushes in the present manner allows for precise alignment of a pylon mounting fitting to be achieved, without the need (or with reduced need) for line boring, resulting in faster, more accurate and more efficient assembly of wing-to-pylon junctions and the like.

The expression "the clevis portion being integrally formed with the connecting portion" should be understood as meaning that the clevis portion and the connecting portion are manufactured as a single unified article. For example, they may be made as a single casting, or from two or more components that are welded together.

Preferably the first bore incorporates a double eccentric bush, to provide multiple degrees of freedom in respect of adjusting the pylon mounting fitting.

The second bore may also incorporate a double eccentric bush, again to provide multiple degrees of freedom in respect of adjusting the pylon mounting fitting.

Alternatively, the second bore may incorporate a single eccentric bush.

One or more of the eccentric bushes may be provided with an anti-rotation mechanism, to prevent rotation during flight operations.

Advantageously, one or more of the eccentric bushes may incorporate a tapered inner bore that is arranged to plastically deform (i.e. cold expand) when receiving the pin or bolt, to lock the eccentric bush within the respective bore of the clevis portion. Beneficially, such an eccentric bush is essentially self-locking, improving the efficiency of the overall wing-to-pylon junction (or tail-to-pylon junction or fuselage-to-pylon junction) assembly process. The tapered internal bore may have a taper angle of approximately 1°, for example.

In certain examples, the connecting portion is in the form of a flange having the plurality of holes therein, for receiving bolts or rivets, for example.

The pylon mounting fitting may be an underwing fitting, or an overwing fitting, or a tail fitting, or a fuselage fitting, for example.

According to a second aspect of the invention there is provided an aircraft wing-to-pylon subassembly comprising: a wing structure; a pylon; and a pylon mounting fitting according to the first aspect, wherein the connecting portion is attached to the wing structure and the clevis portion is attached to a lug of the pylon by a pin or bolt passing through the first and second bores and the lug of the pylon.

According to a third aspect of the invention there is provided an aircraft tail-to-pylon subassembly comprising: a tail structure (or empennage); a pylon; and a pylon mounting fitting according to the first aspect, wherein the connecting portion is attached to the tail structure and the clevis portion is attached to a lug of the pylon by a pin or bolt passing through the first and second bores and the lug of the pylon.

According to a fourth aspect of the invention there is provided an aircraft fuselage-to-pylon subassembly comprising: a fuselage structure; a pylon; and a pylon mounting fitting according to the first aspect, wherein the connecting portion is attached to the fuselage and the clevis portion is attached to a lug of the pylon by a pin or bolt passing through the first and second bores and the lug of the pylon

With the second, third and fourth aspects, the pin may be a fuse pin configured to fail when subjected to a threshold load. In the case of underwing engines, for example, such a fuse pin enables the pylon and the attached engine to detach from the wing structure in the event of a "wheel-up" landing or crash landing.

The aircraft wing-to-pylon subassembly may have two such pylon mounting fittings to which the pylon is attached, with each pylon mounting fitting being attached to a respective lug of the pylon using a respective pin or bolt.

The subassembly may further comprise an engine attached to the pylon.

According to a fifth aspect of the invention there is provided an aircraft (e.g. a commercial passenger aircraft) comprising one or more subassemblies according to the second, third or fourth aspects.

According to a sixth aspect of the invention there is provided a method of constructing a subassembly for an aircraft, the method comprising: obtaining or forming a pylon mounting fitting according to the first aspect, with eccentric bush(es) therein; attaching the connecting portion of the pylon mounting fitting to a structure of the aircraft; and attaching the clevis portion of the pylon mounting fitting to a pylon, by inserting a lug of the pylon between the first and second fork parts and inserting a pin or bolt through the first and second bores (i.e. through the eccentric bush(es) fitted therein) and the lug of the pylon.

The method may further comprise rotating the eccentric bush(es) to produce a concentric hinge line through the first and second bores and the lug of the pylon, prior to insertion of the pin or bolt.

The method may further comprise cold working the eccentric bush(es) within the respective bore(s), e.g. by forcing a mandrel therethrough, to secure the eccentric bush(es) in place within the respective bore(s) prior to inserting the respective pin or bolt.

The method may further comprise cold expanding the eccentric bush(es) within the respective bore(s) to lock the eccentric bush(es) in place. Advantageously and efficiently, the cold expanding may be achieved by inserting the respective pin or bolt through the first and second bores and the lug of the pylon.

### BRIEF DESCRIPTION OF THE DRAWINGS

Embodiments of the invention will now be described, by way of example only, and with reference to the drawings in which:
Figure 1 is a schematic perspective view of a pair of pylon mounting fittings (in this case, pylon underwing fittings), each pylon mounting fitting comprising a respective flange portion and a clevis portion, the clevis portion incorporating first and second bores, each bore being fitted with a respective eccentric bush;
Figure 2 illustrates the pair of pylon mounting fittings of Figure 1 in front view, with a pylon (shown using broken lines) suspended from the clevis portions of the pylon mounting fittings, and also showing a hinge line through the eccentric bushes;
Figure 3 is a schematic view along the hinge line of Figure 2, showing how adjustment of double eccentric bushes in the bores of a clevis allows adjustment of the hinge line to correct the pitch and toe to target values and align the bores of the eccentric bushes for concentricity; and
Figure 4 illustrates a passenger aircraft having engines suspended from the wings by pylons, the pylons being attached to the wings by means of pylon mounting fittings of the form illustrated in Figures 1 to 3.

In the figures, like elements are indicated by like reference numerals throughout.

### DETAILED DESCRIPTION OF PREFERRED EMBODIMENTS

The present embodiments represent the best ways known to the Applicant of putting the invention into practice. However, they are not the only ways in which this can be achieved.

In the illustrated embodiments, the pylon mounting fittings are underwing fittings, as is often the case with commercial aircraft, and accordingly will primarily be described in this context. However, in other embodiments, the pylon mounting fittings may be overwing fittings, or tail fittings, or fuselage fittings, for instance.

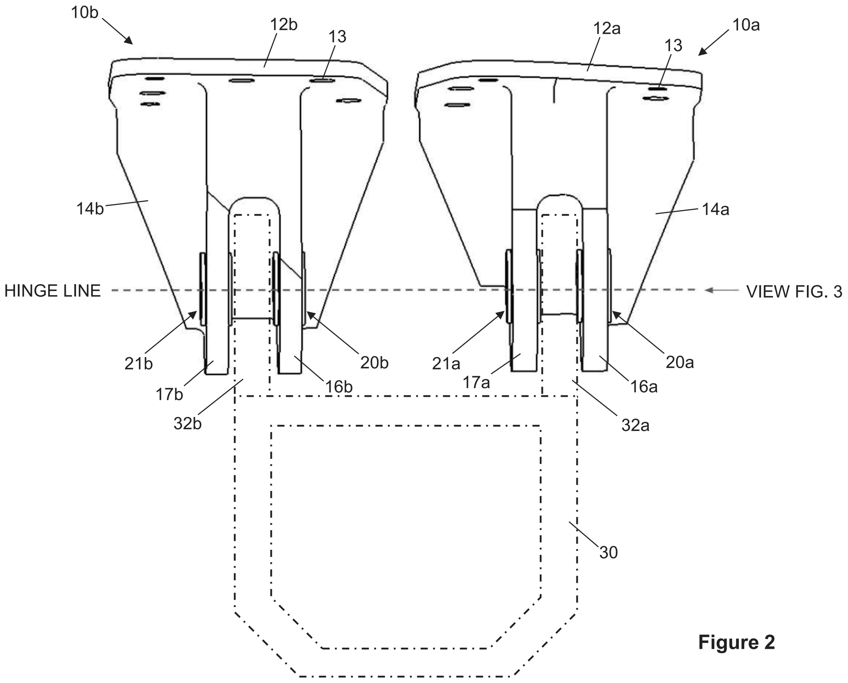

Reference is initially made to Figures 1 and 2, which show first and second pylon mounting fittings 10a, 10b arranged side by side to support a pylon 30 (Figure 2). However, the present invention is by no means limited to use in the illustrated wing-to-pylon configuration, and may be used with other wing-to-pylon configurations instead. Moreover, although the present description and drawings primarily relate to an embodiment employing a pair of pylon mounting fittings 10a, 10b, it should be understood that the present principles may instead be applied to only a single pylon mounting fitting.

As illustrated, the first pylon mounting fitting 10a comprises a flange portion 12a and a clevis portion 14a. The clevis portion 14a is integrally formed with the flange portion 12a. That is to say, the clevis portion 14a and the flange portion 12a are manufactured as a single unified article, e.g. made as a single casting, or from two or more components that are welded together. The flange portion 12a, which may also be termed a connecting portion, comprises a plurality of holes 13, by means of which the flange portion 12a may be attached to an aircraft wing structure (typically to a wing spar or a wing lower cover), e.g. using bolts or rivets. The clevis portion 14a, when viewed in cross-section, or from the front as in Figure 2, extends perpendicularly (or substantially perpendicularly) from the flange portion 12a.

The clevis portion 14a comprises mutually-opposing first and second fork parts 16a, 17a. The first fork part 16a has a first bore 18a therein. The second fork part 17a has a second bore therein that is concentrically aligned with the first bore 18a. The first and second fork parts 16a, 17a are separated by a distance appropriate to receive a first lug 32a of the pylon 30. Thus, the first lug 32a of the pylon 30 is received between the first bore 18a and the second bore. The first lug 32a has a hole or "lug bore" therein that is aligned with the first and second bores of the first and second fork parts 16a, 17a, such that the first lug 32a can be attached to the clevis portion 14a by means of a pin or bolt passing through the first and second bores and the lug bore. In practice, due to manufacturing and assembly tolerances, the lug bore in the first lug 32a may not be accurately aligned with the first and second bores of the first and second fork parts 16a, 17a. In other words, the hinge line of the clevis portion 14a may not be concentrically aligned with the axis of the lug bore in the first lug 32a. The present invention addresses this problem by incorporating an eccentric bush 20a in the first bore 18a, and preferably an eccentric bush 21a in the second bore as well. These eccentric bushes 20a, 21a are described in greater detail below.

Similarly, the second pylon mounting fitting 10b comprises a flange portion 12b and a clevis portion 14b. The clevis portion 14b is integrally formed with the flange portion 12b. That is to say, the clevis portion 14b and the flange portion 12b are manufactured as a single unified article, e.g. made as a single casting, or from two or more components that are welded together. The flange portion 12b, which again may be termed a connecting portion, comprises a plurality of holes 13, by means of which the flange portion 12b may be attached to an aircraft wing structure, e.g. using bolts or rivets, alongside the flange portion 12a of the first pylon mounting fitting 10a. The clevis portion 14b, when viewed in cross-section, or from the front as in Figure 2, extends perpendicularly (or substantially perpendicularly) from the flange portion 12b.

The clevis portion 14b comprises mutually-opposing first and second fork parts 16b, 17b. The first fork part 16b has a first bore 18b therein. The second fork part 17b has a second bore therein that is concentrically aligned with the first bore 18b. The first and second fork parts 16b, 17b are separated by a distance appropriate to receive a second lug 32b of the pylon 30. Thus, the second lug 32b of the pylon 30 is received between the first bore 18b and the second bore. The second lug 32b has a hole or "lug bore" therein that is aligned with the first and second bores of the first and second fork parts 16b, 17b, such that the second lug 32b can be attached to the clevis portion 14b by means of a pin or bolt passing through the first and second bores and the lug bore. Again, in practice, due to manufacturing and assembly tolerances, the lug bore in the second lug 32b may not be accurately aligned with the first and second bores of the first and second fork parts 16b, 17b. In other words, the hinge line of the clevis portion 14b may not be concentrically aligned with the axis of the lug bore in the second lug 32b. As above, the present invention addresses this problem by incorporating an eccentric bush 20b in the first bore 18b, and preferably an eccentric bush 21b in the second bore as well.

Moreover, for similar reasons, the hinge line of the clevis portion 14a of the first pylon mounting fitting 10a may not be accurately aligned with the hinge line of the clevis portion 14b of the second pylon mounting fitting 10b, as well as not being accurately aligned with the axis of the lug bores in the first and second lugs 32a, 32b of the pylon 30. Again, this can be remedied by the eccentric bushes incorporated in the bores of the first and second pylon mounting fittings 10a, 10b.

As those skilled in the art will appreciate from other areas of mechanical engineering, an eccentric bush (sometimes referred to as an "eccentric bushing") comprises a cylindrical sleeve with an off-centre (eccentric) inner bore, allowing for eccentricity between the inner and outer diameters of the bush. This eccentricity enables controlled adjustment of the position of the inner bore when the bush is rotated.

A single eccentric bush has a single eccentric bore, allowing radial adjustment of the inner bore.

A double eccentric bush incorporates two eccentric bores arranged at an offset angle to each other, provided by inner and outer bushes. This allows multiple degrees of freedom in respect of the alignment of the inner bore.

Preferably, in each pylon mounting fitting 10a, 10b, double eccentric bushes are incorporated in both the first bore and the second bore, to provide multiple degrees of freedom for adjusting the hinge line across the clevis portion. This enables an assembly engineer to compensate for manufacturing and assembly tolerances in respect of the pylon mounting fittings 10a, 10b, and/or in respect of the pylon 30 (especially the lugs 32a, 32b thereof).

Alternatively, for each pylon mounting fitting, 10a, 10b, one bore may be provided with a double eccentric bush and the other bore may be provided with a single eccentric bush. In some cases, this may provide sufficient adjustability.

The eccentric bushes 20a, 21a (and likewise bushes 20b, 21b) may be installed in the bores of the pylon mounting fitting 10a (and likewise in the bores of the pylon mounting fitting 10b) by inserting the bushes from whichever side is convenient. To secure each eccentric bush in place, it may be cold worked, e.g. by forcing a mandrel through the bush.

Subsequently, during assembly of the wing-to-pylon junction, by the assembly engineer rotating the eccentric bushes a radial offset can be produced, to correct the hinge line to compensate for manufacturing and assembly tolerances and align with target values of pitch and toe.

The concepts of pitch and toe, in the context of underwing pylon mounting fittings, are illustrated in Figures 1 and 3. As those skilled in the art will appreciate, "toe" refers to position in the X-direction, which is parallel to the longitudinal direction of the engine. A Y-direction (not illustrated) is oriented transversely to the engine. "Pitch" refers to position in the Z-direction, which is orthogonal to both the X-direction and the Y-direction and may be considered the vertical or heightwise direction. Accordingly, once fitted, the engine is suspended under the wing in the Z-direction and extends forwards in the X-direction.

Figure 1 illustrates, using double-headed arrows, variations in pitch and toe that may be achieved.

Meanwhile, Figure 3 illustrates how adjusting the inner bush and the outer bush of a double eccentric bush - for example, bush 20a of the pylon mounting fitting 10a - may be used to adjust the position of the hinge line through the underwing fitting, to correct the pitch and toe to target values and enable the bores of the pylon mounting fitting 10a to be aligned for concentricity with the lug bore of the respective lug 32a of the pylon 30. It will be appreciated that the adjacent bush 21a may also be adjusted as part of this process.

In this example, prior to adjustment of the double eccentric bush 20a, the hinge line is at a position (X0, Z0). It can be seen that rotating the inner and outer bushes of the double eccentric bush 20a allows adjustment of the hinge line from X0 by a distance a, and from Z0 by a distance b, such that, post-adjustment, the hinge line is at a position (X0+a, Z0+b). The quantity a is the distance from X0 to correct the toe, and the quantity b is the distance from Z0 to correct the pitch.

Once the eccentric bushes have been adjusted as necessary, it is preferable to be able to lock their rotational position, particularly to prevent them from rotating during flight operations. Locking of the eccentric bushes in their respective bores may be achieved in a number of ways, for instance by means of one of the following examples.

In a first example, each eccentric bush may be provided with an anti-rotation mechanical mechanism, as will be readily apparent to those skilled in the art.

In a second example, each eccentric bush may be cold expanded in its respective bore to lock it into place. For example, the eccentric bush may incorporate a tapered inner bore (e.g. having a 1° taper angle) that is arranged to plastically deform when the pin or bolt (that connects the clevis portion to the respective lug of the pylon) is introduced, thereby locking the eccentric bush within the respective bore of the clevis portion. Advantageously, such an eccentric bush is essentially self-locking, improving the efficiency of the overall wing-to-pylon junction assembly process. It will be appreciated that other cold expansion techniques are also possible, e.g. by forcing a mandrel through the eccentric bush prior to inserting the pin or bolt.

A measurement and analysis method (metrology) may be employed for determining the relative settings of the eccentric bushes and for aiding the accurate setting of the eccentric bushes. For example, metrology may be used to determine the position of a given bush relative to one or more reference structures, marks or indicia, or relative to a digital twin.

The pin that is inserted through the first and second bores of each clevis portion 14a, 14b, and through the respective lug 32a, 32b of the pylon 30, may be a fuse pin (also known as a shear pin), configured to fail when subjected to a threshold load. Employing such a fuse pin enables the pylon 30 and an attached underwing engine to detach from the wing of the aircraft in the event of a "wheel-up" landing or crash landing, thereby preventing breaking of the wings and reducing the likelihood of fuel being ignited within the wings.

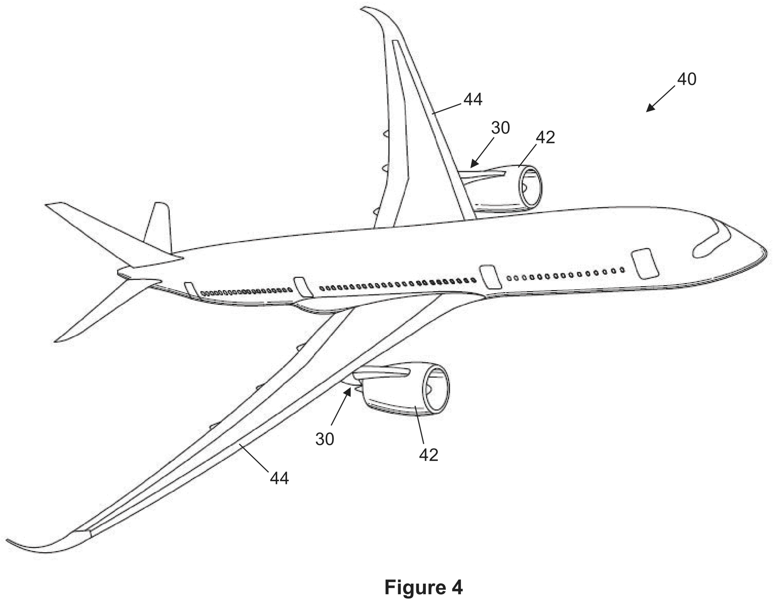

Figure 4 illustrates an example of an aircraft 40 having pylons 30, each of which attaches an engine 42 to a respective wing 44. In the illustrated example, the engines 42 are high-bypass turbofan engines.

On each wing 44, a wing-to-pylon subassembly is formed by the combination of the wing structure, the pylon 30, and one or more underwing pylon mounting fittings 10a, 10b as described above. The flange portion 12a, 12b of the or each pylon mounting fitting 10a, 10b is attached to the wing structure, while the clevis portion 14a, 14b is attached to a respective lug 32a, 32b of the pylon 30 by a pin or bolt as described above. The illustrated aircraft 40 comprises two such subassemblies, one on each wing, with engines 42 attached to the pylons 30.

Advantageously, the use of eccentric bushes in the presently-described manner allows for precise alignment of a pylon mounting fitting to be achieved, without the need for line boring, resulting in faster, more accurate and more efficient assembly of wing-to-pylon junctions and the like.

More particularly, compared to traditional line boring methods, the present technique provides a more efficient and effective method for achieving accurate lug-to-lug concentricity and pitch angle requirements at the wing-to-pylon junction. The present technique provides several benefits, including:
- reducing the time required for alignment, compared to traditional line boring methods;
- improving the accuracy and consistency of alignment, reducing the likelihood of defects and rework;
- improving the ergonomics of the alignment process, reducing the physical strain on assembly engineers;
- a low cost solution that can be easily implemented; and
- can be performed off critical path, improving overall assembly efficiency.

### Modifications and alternatives

Detailed embodiments and some possible alternatives have been described above. As those skilled in the art will appreciate, a number of modifications and further alternatives can be made to the above embodiments whilst still benefiting from the inventions embodied therein.

For example, in the present examples the connecting portion of each pylon mounting fitting 10a, 10b is in the form of a flange 12a, 12b having holes therein. However, in other examples, the connecting portion may take a different form. For example, the pylon mounting fitting may have an "H-splice" form.

As well as the bore(s) of the pylon mounting fitting incorporating an eccentric bush, the lug bore of each of the lugs 32a, 32b of the pylon 30 may also be fitted with an eccentric bush (either a double eccentric bush or a single eccentric bush), to further accommodate misalignments in the various bores.

In another example, only the lug bores may be fitted with eccentric bushes; the bores of the pylon mounting fittings may be provided in a conventional manner, without eccentric bushes.

Although in the present examples the pylon mounting fittings have been primarily described in the context of underwing fittings, in other examples the pylon mounting fittings may be overwing fittings (for mounting an engine above a wing structure), tail fittings (for mounting an engine on a tail structure or empennage), or fuselage fittings (for mounting an engine on a fuselage structure).

## Claims

1. An aircraft pylon mounting fitting (10a; 10b) comprising a connecting portion (12a; 12b) and a clevis portion (14a; 14b), the clevis portion (14a; 14b) being integrally formed with the connecting portion (12a; 12b), wherein the connecting portion (12a; 12b) comprises a plurality of holes (13) for attaching the connecting portion (12a; 12b) to an aircraft wing structure, tail structure or fuselage structure, and wherein the clevis portion (14a; 14b) comprises mutually-opposing first and second fork parts (16a, 17a; 16b, 17b) arranged to receive a lug (32a; 32b) of a pylon (30) therebetween, the first fork part (16a; 16b) incorporating a first bore (18a; 18b) and the second fork part (17a; 17b) incorporating a second bore, the first and second bores being configured to receive a pin or bolt for attaching the clevis portion (14a; 14b) to the lug (32a; 32b) of the pylon (30);
wherein at least the first bore (18a; 18b) incorporates an eccentric bush (20a; 20b).

2. The pylon mounting fitting according to claim 1, wherein the first bore (18a; 18b) incorporates a double eccentric bush (20a; 20b).

3. The pylon mounting fitting according to claim 1 or claim 2, wherein the second bore incorporates a double eccentric bush or a single eccentric bush (21a; 21b).

4. The pylon mounting fitting according to any preceding claim, wherein one or more of the eccentric bushes are provided with an anti-rotation mechanism.

5. The pylon mounting fitting according to any preceding claim, wherein one or more of the eccentric bushes incorporates a tapered inner bore that is arranged to plastically deform when receiving the pin or bolt, to lock the eccentric bush within the respective bore of the clevis portion (14a; 14b);
optionally wherein the tapered internal bore has a taper angle of approximately 1°.

6. The pylon mounting fitting according to any preceding claim, wherein the connecting portion (12a; 12b) is in the form of a flange.

7. The pylon mounting fitting according to any preceding claim, being an underwing fitting, or an overwing fitting, or a tail fitting, or a fuselage fitting.

8. An aircraft wing-to-pylon subassembly comprising:
a wing structure;
a pylon (30); and
a pylon mounting fitting (10a; 10b) according to claim 7 and being an underwing fitting or an overwing fitting, wherein the connecting portion (12a; 12b) is attached to the wing structure and the clevis portion (14a; 14b) is attached to a lug (32a; 32b) of the pylon (30) by a pin or bolt passing through the first and second bores and the lug (32a; 32b) of the pylon (30);
optionally wherein the subassembly further comprises an engine (42) attached to the pylon (30).

9. An aircraft tail-to-pylon subassembly comprising:
a tail structure;
a pylon (30); and
a pylon mounting fitting (10a; 10b) according to claim 7 and being a tail fitting, wherein the connecting portion (12a; 12b) is attached to the tail structure and the clevis portion (14a; 14b) is attached to a lug (32a; 32b) of the pylon (30) by a pin or bolt passing through the first and second bores and the lug (32a; 32b) of the pylon (30);
optionally wherein the subassembly further comprises an engine (42) attached to the pylon (30).

10. An aircraft fuselage-to-pylon subassembly comprising:
a fuselage structure;
a pylon (30); and
a pylon mounting fitting (10a; 10b) according to claim 7 and being a fuselage fitting, wherein the connecting portion (12a; 12b) is attached to the fuselage and the clevis portion (14a; 14b) is attached to a lug (32a; 32b) of the pylon (30) by a pin or bolt passing through the first and second bores and the lug (32a; 32b) of the pylon (30);
optionally wherein the subassembly further comprises an engine (42) attached to the pylon (30).

11. The subassembly according to any of claims 8 to 10, wherein the pin is a fuse pin configured to fail when subjected to a threshold load.

12. The subassembly according to any of claims 8 to 11, having two such pylon mounting fittings (10a, 10b) to which the pylon (30) is attached, with each pylon mounting fitting (10a, 10b) being attached to a respective lug (32a, 32b) of the pylon (30) using a respective pin or bolt.

13. An aircraft (40) comprising one or more subassemblies according to any of claims 8 to 12.

14. A method of constructing a subassembly for an aircraft, the method comprising:
obtaining or forming a pylon mounting fitting (10a; 10b) according to any of claims 1 to 7;
attaching the connecting portion (12a; 12b) of the pylon mounting fitting (10a; 10b) to a structure of the aircraft; and
attaching the clevis portion (14a; 14b) of the pylon mounting fitting (10a; 10b) to a pylon (30), by inserting a lug (32a; 32b) of the pylon (30) between the first and second fork parts (16a, 17a; 16b, 17b) and inserting a pin or bolt through the first and second bores and the lug (32a; 32b) of the pylon (30).

15. The method according to claim 14, further comprising rotating the eccentric bush(es) to produce a concentric hinge line through the first and second bores and the lug (32a; 32b) of the pylon (30), prior to insertion of the pin or bolt; and/or
further comprising cold working the eccentric bush(es) within the respective bore(s), to secure the eccentric bush(es) in place within the respective bore(s) prior to inserting the respective pin or bolt; and/or
further comprising cold expanding the eccentric bush(es) within the respective bore(s) to lock the eccentric bush(es) in place, optionally wherein the cold expanding is performed by inserting the respective pin or bolt through the first and second bores and the lug (32a; 32b) of the pylon (30).
